Europäisches Patentamt

European Patent Office

Office européen des brevets

(19)

(11) EP 1 480 187 A2

(12) **EUROPÄISCHE PATENTANMELDUNG**

(43) Veröffentlichungstag:
  24.11.2004 Patentblatt 2004/48

(51) Int Cl.⁷: $G08G\ 1/123$, G06K 9/62,
  G06T 7/20, B60R 1/00

(21) Anmeldenummer: 04010426.7

(22) Anmeldetag: 03.05.2004

(84) Benannte Vertragsstaaten:
  **AT BE BG CH CY CZ DE DK EE ES FI FR GB GR
  HU IE IT LI LU MC NL PL PT RO SE SI SK TR**
  Benannte Erstreckungsstaaten:
  **AL HR LT LV MK**

(30) Priorität: **23.05.2003 DE 10323915**

(71) Anmelder: **DaimlerChrysler AG**
  **70567 Stuttgart (DE)**

(72) Erfinder:
  • **Franke, Uwe, Dr.-Ing.**
    **73066 Uhingen (DE)**
  • **Hahn, Stefan, Dipl.-Inf.**
    **89075 Ulm (DE)**

(54) **Kamerabasierte Positionserkenung für ein Strassenfahrzeug**

(57)  Um den Komfort bei der Bedienung von Straßenfahrzeugen weiter zu erhöhen und die Belastung des Fahrzeugführers zu verringern, werden in modernen Fahrzeugen zunehmend autonome oder teil-autonome Funktionen realisiert. Bei der neuartigen kamerabasierten Positionserkennung für ein Straßenfahrzeug wird das in Fahrtrichtung eines Fahrzeug liegende Umfeld mit einer Kamera erfasst. Mittels der erfassten Bilddaten wird die Lage des Fahrzeuges in Bezug auf eine in den gewonnenen Bilddaten identifizierten optische Signatur in seiner Umgebung bestimmt. Zur Lagebestimmung wird die Kenntnis der Beziehung zwischen dem Umgebungskoordinatensystem der optischen Signatur und dem Kamerakoordinatensystems herangezogen. Hierbei erfolgt die Lagebestimmung in Bezug auf die optische Signatur auf Basis eines Template Matching auf den Bilddaten. Aus den Parametern dieses Template Matching (beispielsweise Stauchungs- und Rotationsparameter) kann in Kenntnis der vorliegenden Koordinatensysteme direkt auf die Lage des Fahrzeuges bezüglich der optischen Signatur geschlossen werden. Dieses Verfahren arbeitet auch dann noch mit hoher Zuverlässigkeit, wenn die optische Signatur in den Bilddaten auf Grund von Verdeckungen nicht vollständig einsehbar ist. Auch ist das Verfahren recht robust wenn die optische Signatur durch Verschmutzung oder Abrieb nicht mehr optimal in den Bilddaten abgebildet wird.

*Fig. 10*

**Beschreibung**

Die Erfindung betrifft eine für eine kamerabasierte Positionserkennung in einem Straßenfahrzeug geeignete Vorrichtung und ein zum Betrieb dieser Vorrichtung geeignetes Verfahren nach den Oberbegriffen der Patentansprüche 1 und 13.

Um den Komfort bei der Bedienung von Straßenfahrzeugen weiter zu erhöhen und die Belastung des Fahrzeugführers zu verringern, werden in modernen Fahrzeugen zunehmend autonome oder teil-autonome Funktionen realisiert. So soll beispielsweise mit einem System zur intelligenten Fahrzeugverfolgung der Fahrzeugführer bei der Einhaltung des Abstandes zu vorrausfahrenden Fahrzeugen unterstützt werden oder es soll mittels einer kamerabasierten Verkehrszeichenerkennung erreicht werden, dass sich der Fahrzeugführer, insbesondere im Innenstadtbereich besser auf die Straßenbereich befindlichen Personen und Fahrzeuge konzentrieren kann.

In vielen alltäglichen Situationen ist es die Aufgabe eines Fahrzeuglenkers, sein Fahrzeug entlang einer bestimmten Spur zu führen oder dieses an einer bestimmten Stelle, beispielsweise in einer Parkbucht, zum Halten bringen. Zur Unterstützung eines Fahrzeugführers in solchen Situationen beschreibt die JP 2000-29524 A ein auf einer Zeilenkamera basierendes System für ein spurgeführtes Fahrzeug. Hierbei wird das Fahrzeug entlang zweier als parallele Führungslinien ausgebildeten optischen Signaturen auf der Fahrbahn geführt. Mittels der Kamerazeile wir die Fahrbahn unterhalb des Fahrzeuges quer zur Fahrtrichtung Schrittweise erfasst. Die von der Kamerazeile gelieferten Bilddaten beschreiben an der jeweiligen Messposition das dort vorherrschende Helligkeitsprofil quer zur Fahrtrichtung. Die beiden Führungslinien treten dabei in dem Helligkeitsprofil deutlich hervor, so dass das System in der Lage ist, dass Fahrzeug in Bezug auf die beiden Führungslinien zentriert zu führen. Dies indem das Fahrzeug so quergesteuert wird, dass die beiden Abbildungen der optischen Signaturen (Führungslinien) sich gleichabständig zum Mittelpunkt des Helligkeitsprofils in diesem abbilden. An denjenigen Bereichen, an welchen das Fahrzeug gezielt zum Halt gebracht werden soll, sind zwischen den beiden als optische Singnaturen ausgeführten Führungslinien weitere symbolhafte optische Signaturen auf der Fahrbahn aufgebracht. Beginnt das Fahrzeug nun mit der Überfahrt über eine solche symbolhafte optische Signatur, so ändert sich mit jedem Aufnahmeintervall der Zeilenkamera die Erscheinungsform Helligkeitsprofils in Abhängigkeit der Position des Fahrzeuges zur symbolhaften Signatur. Die symbolhafte optische Signatur ist nun dergestalt ausgebildet, dass das Helligkeitsprofil an derjenigen Stelle, an welcher das Fahrzeug zum Halt kommen soll, ein eindeutiges, signifikantes Muster aufweist. Die Erfassung des Helligkeitsprofils mittels der Zeilenkamera ist jedoch sehr anfällig gegen Verschmutzung und Abrieb der auf der Fahrbahn angebrachten optischen Signaturen. Auch ist eine Fahrzeugführung entlang von Führungslinien für einen Verwendung in einem dynamischen Straßenverkehrsszenario nur bedingt geeignet. Auch wird die optische Signatur erst dann erfasst, wenn das Fahrzeug bereits mit deren Überfahrt begonnen hat.

Für ein nicht spurgebundenes Straßenfahrzeug beschreibt die JP 2001-343212 A ein kamerabasiertes System zur geführten Einfahrt in eine auf der Fahrbahn eingezeichnete Parkbucht. Das System macht sich hierbei zu Nutze, dass auf der Fahrbahn eingezeichnete Parkbuchten in der Regel rechts und links durch deutlich optisch wahrnehmbare Linien (Signaturen) begrenzt werden. In den von einer im Fahrzeug integrierten Kamera gewonnenen Bilddaten werden innerhalb einer Bildverarbeitungseinheit diese optischen Signaturen (Begrenzungslinien) identifiziert und deren Ausrichtung vermessen. Das es sich bei den optischen Signaturen um parallele Geraden handelt, bilden sich diese in den Kamerabilddaten auch wieder als Geraden ab, so dass deren Winkelablage gegenüber der x-und y-Achse des Kamerabildes einfach ermittelt werden kann. Aus den Winkelablagen beider Geradenstücke zueinander und der Kenntnis deren Beabstandung kann auf geometrisch einfache Weise der Abstand und die Ausrichtung des Fahrzeuges in Bezug auf die Parkbucht berechnet werden. Die Bilddaten werden dem Fahrzeugführer auf einer Anzeige dargestellt, wobei die Darstellung durch Richtungspfeile überlagert wird, welche angeben in wie weit und in welche Richtung das Fahrzeug zum Erreichen der Parkbucht gesteuert werden muss.

Entsprechen beschreiben die japanischen Patentanmeldungen JP 2002-172988 A und JP 2002-172989 A die Möglichkeit wie aus den mittels dem aus JP 2001-343212 A bekannten Bildverarbeitungssystem eine zumindest teil-autonome Fahrzeugführung in die Parkbucht erfolgen kann, indem die zum Einparken notwendige Fahrspur vorausberechnet wird. Die Auswertung der Bilddaten zur Lagebestimmung setzt jedoch gut einsehbare optische Signaturen (Begrenzungslinien) voraus, damit deren Winkelablage in den Bilddaten bestimmt werden kann. Insbesondere ist es für eine korrekte Lagebestimmung notwendig, dass die Anfangspunkt der optischen Signaturen auf der Fahrbahn eindeutig bestimmt werden können. Dies ist jedoch in der Realität auf Grund von Verschmutzungen und Abrieb der Fahrbahnmarkierungen nicht immer möglich. Auch bei der Einfahrt in die Parkbucht ab dem Zeitpunkt, ab welchem die Anfänge der optischen Signaturen nicht mehr durch die Kamera eingesehen werden eine automatische Lageberechnung ohne weitere sensorische Hilfsmittel nicht mehr möglich.

Aufgabe der Erfindung ist es deshalb, eine kamerabasierte Positionserkennung für Straßenfahrzeuge zu finden, welche zum einen eine freie Manövrierfähigkeit des Fahrzeuges erlaubt und zum anderen robust gegen Verdeckungen beziehungsweise Verschmutzungen und Abrieb der zu erfassenden optischen Signaturen ist.

Die Aufgabe wird durch eine Vorrichtung und ein Verfahren für eine kamerabasierte Positionserkennung für ein Straßenfahrzeug mit den Merkmalen der Patentansprüche 1 und 13 gelöst.

Vorteilhafte Ausgestaltungen und Weiterbildungen der Erfindung sind in den Unteransprüchen beschrieben.

Bei der neuartigen kamerabasierten Positionserkennung für ein Straßenfahrzeug wird das in Fahrtrichtung eines Fahrzeug liegende Umfeld mit einer Kamera erfasst. Mittels der erfassten Bilddaten wird die Lage des Fahrzeuges in Bezug auf eine in den gewonnenen Bilddaten identifizierten optische Signatur in seiner Umgebung bestimmt. Zur Lagebestimmung wird die Kenntnis der Beziehung zwischen dem Umgebungskoordinatensystem der optischen Signatur und dem Kamerakoordinatensystems herangezogen. In erfinderischer Weise erfolgt die Lagebestimmung in Bezug auf die optische Signatur auf Basis eines Template Matching auf den Bilddaten. Hierzu wird ein in einem Speicher abgelegtes Template einer optischen Signatur mit der in Bilddaten identifizierten optischen Signatur in der Umgebung des Fahrzeuges überlagert (Template Matching). Aus den Parametern dieses Template Matchings (beispielsweise Stauchungs- und Rotationsparameter) kann in Kenntnis der vorliegenden Koordinatensysteme direkt auf die Lage des Fahrzeuges bezüglich der optischen Signatur geschlossen werden. Durch die Anwendung des Template Matching auf das vorliegende Problem wird in besonders vorteilhafter Weise ausgenutzt, dass dieses Verfahren auch dann noch mit hoher Zuverlässigkeit arbeitet, wenn die optische Signatur in den Bilddaten auf Grund von Verdeckungen nicht vollständig einsehbar ist (beispielsweise durch Überdeckung durch das eigene Fahrzeug bei der Überfahrt oder auch zeitweilige Verdeckung durch andere Verkehrsteilnehmer). Auch arbeitet das Template Matching recht robust in den Fällen, in welchen die optische Signatur durch Verschmutzung oder Abrieb nicht mehr optimal in den Bilddaten abgebildet wird.

Nachfolgend wird die Erfindung mit Hilfe von Ausführungsbeispielen und Figuren im Detail erläutert. Hierbei zeigt

Fig. 1      zwei typische Fahrbahnmarkierungen im Bereich einer Bushaltestelle und

Fig. 2      Templates, welche aus den in Fig. 1 aufgezeigten Bildern der Fahrbahnmarkierungen extrahiert wurden.

Fig. 3      beschreibt die der Berechnung zugrunde liegenden geometrischen Verhältnisse.

Fig. 4      zeigt beispielhaft die Projektion eines dreidimensionalen, aus einer Punktliste bestehenden Templates auf eine Ebene (Fahrbahn).

Fig. 5      beschreibt die Auswirkung der Variation der Ausrichtungsparameter der Kamera auf die Überlagerung von Template und Bilddaten.

Fig. 6      beschreibt das Beispiel eines zweidimensionalen Distanzbildes.

Fig. 7      zeigt das Distanzbild der in Fig. 1a) dargestellten Bilddaten.

Fig. 8      beschreibt den Ablauf im Rahmen der Detektion als Flussdiagramm.

Fig. 9      zeigt das Ergebnis der Powell Minimierung über eine Bildfolge.

Fig. 10      zeigt ein den Bilddaten überlagertes Template mit einem das Template umschreibenden Rechteck zur Verfolgung mittels Kalmanfilterung.

Fig. 11      zeigt die Optimierung der Powell Minimierung mittels Kalmanfilter.

Fig. 12      zeigt ein den Matching- und Tracking-Vorgang beschreibendes Flussdiagramm.

Fig. 13      zeigt die Robustheit des Verfahrens anhand unterschiedlicher Kameraausrichtungen in Bezug auf eine identische Positionsmarke.

In besonders vorteilhafter Weise wird in Kenntnis der Lage des Fahrzeuges in Bezug auf die optische Signatur, eine zumindest teil-autonome Fahrzeugführung eingeleitet. Im Rahmen dieser Fahrzeugführung wird das Fahrzeug beispielsweise an einer vorbestimmten Position in Bezug auf die optische Signatur zum Halt gebracht. Auch wäre es beispielsweise denkbar ab einer in Bezug auf dien optische Signatur definierten Stelle, beispielsweise bei Richtungspfeilen auf der Fahrbahn, das Fahrzeug definiert auf der Fahrbahn auszurichten, oder bei Erkennen der Haltelinie einer Ampeln das Fahrzeug bei Rotsignal der Ampel mit einer idealen Bremskennlinie korrekt zum Halten zu bringen. Besonders gewinnbringend lässt sich die Erfindung dann ausgestalten, wenn das Template Matching in einem dreidimensionalen Koordinatenraum erfolgt. Hierdurch wird es möglich die optischen Signaturen, anhand welcher die Lage des Straßenfahrzeuges geschätzt wird, nicht nur auf zweidimensionale optische Signaturen auf der Fahrbahn zu begrenzen. Es wird hierdurch auch möglich ohnehin bereits vorhandene dreidimensionale Gegenstände als optische Signaturen für die kamerabasierte Positionserkennung zu nutzen. Auch wird es möglich geeignete zweidimensionale optische Signaturen an anderer Stelle im Raum als auf der Fahrbahn anzubringen. Auf diese Weise könnten die optischen Signaturen besser an Stellen angebracht werden, welche insbesondere gegen Verschmutzung und Abrieb geschützt werden können; denkbar wäre es beispielsweise zur autonomen Navigation eines Fahrzeuges in ein Garage, die optische Signatur in der Innenseite der Garage an deren Vorderwand anzubringen. Auch ist es denkbar bei Kolonnenfahrt aus den Bilddaten des vorausfahrenden Fahrzeuges ein dreidimensionales Template abzuleiten, so dass das Fahrzeug mit Hilfe der Erfindung mit definiertem Abstand und Ausrichtung diesem Fahrzeug nachfolgen kann.

Insbesondere bei optischen Signaturen, welche Witterungseinflüssen ausgesetzt sind, sind deren Abbildungseigenschaften im Kamerabild stark von den aktuellen Wetterverhältnissen abhängig (Trocken oder Nass). Es hat sich gezeigt, dass sich die Zuverlässigkeit des Template Matchings insbesondere dann steigern lässt, wenn man die Überlagerung von Kamerabilddaten und Templates auf Grundlage von Kantenbildern (sowohl Kamerabilddaten als auch Templates) durchführt. In diesem Falle müssen die Kamerabilddaten vor dem Template Matching einer Kantenextraktion unterzogen werden.

Desweiteren lässt sich die Robustheit des Template Matching auch dadurch verbessern, dass das Template der optischen Signatur nicht als Kantenbild sondern auf Basis einzelner Punkte, d.h. als Punktliste abgespeichert und verarbeitet wird. Hierdurch wird es möglich auch Bilddaten innerhalb welcher die Konturen der optischen Signatur nur unterbrochen oder mit einem schlechten Kontrast abgebildet wurden robust mittels des Template Matchings zu verarbeiten. Eine solche Repräsentation des Templates erlaubt es auch dieses, bei dessen Konstruktion in der Lernphase des Systems, direkt aus beispielhaft aufgenommenen Bilddaten zu rekonstruieren. Hierzu ist es nur notwendig aus den durch das Kamerasystem generierten Bilddaten durch Rückrechnung über die einzelnen Koordinatsysteme einzelnen Bilddaten einer optischen Signatur direkt einem Punkt innerhalb der Punktliste des Templates zuzuordnen. In den Bilddaten schlecht abgebildete optische Signaturen könnten somit im Rahmen einer Punktliste sinnvoll als Template abgelegt werden, so dass durch weitere Bilddaten sodann die Punktliste möglicherweise erweitert beziehungsweise verbessert oder korrigiert werden könnte.

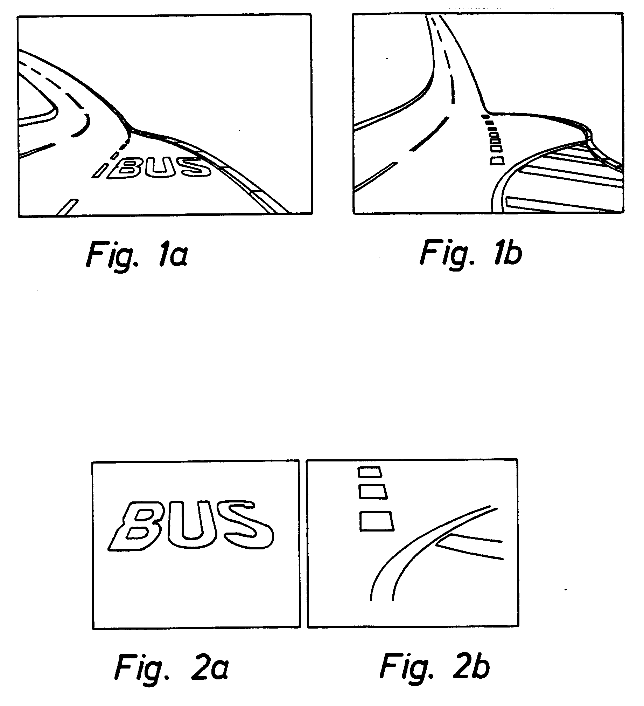

Nachfolgend soll beispielhaft die Erfindung anhand ihrer Anwendung zur gezielten Heranführung von Bussen an Bushaltestellen im Detail erläutert werden. Eine präzise Lageschätzung ist hierbei sehr wichtig, um einerseits Beschädigungen insbesondere der Fahrzeugreifen zu verhindern und um andererseits den Komfort für die Businsassen zu steigern, indem in einer für dies idealen Fahrspur und mit einem idealen Bremsvorgang an die Haltestelle herangefahren wird. Dabei wird das erfinderische System zur kamerabasierten Lageschätzung für Straßenfahrzeuge so ausgelegt, dass es autonom Passagierbusse an deren Haltestellen heranführt. Hierbei wird kontinuierlich die Lage des Busses in Bezug auf das Koordinatensystem der Fahrzeugumgebung (Weltkoordinatensystem), in welchem sich die optischen Signaturen wie Straßenmarkierungen, Stopplinien oder andere für Bushaltestellen typische Muster befinden, geschätzt. Die Lageerkennung erfolgt hierbei auf Grundlagen der Bilddaten einer Kamera, welche die Umgebung vor dem Passagierbus erfasst, wobei die Bilddaten mit einem Modell (Template) der Bushaltestelle verglichen (Matching) wird. Die Lageschätzung ist insbesondere deshalb nicht einfach, da die typischen Markierungen an Bushaltestellen für gewöhnlich nicht aus einfachen Geraden Linien bestehen. Figur 1 zeigt zwei typische Fahrbahnmarkierungen wie sie sich im Bereich einer Bushaltestelle finden. Figur 1a) zeigt als optische Signatur das Wort "BUS", welches meist im Bereich der Stelle der Bushaltestelle auf die Fahrbahn aufgebracht wird, an welcher der Bus zum Halten kommen soll. Figur 1b) zeigt die Bilddaten einer typischen Einmündung in eine Bushaltestelle. Hierbei ist im rechten Bildvordergrund als optische Signatur eine gekrümmte Linie zu sehen, welche von der allgemeinen Fahrbahn auf die den Bussen im Bereich der Bushaltestelle vorbehaltene Fahrbahn hinleitet. Die Begrenzung dieser Fahrbahn von der allgemeinen Fahrbahn besteht wie in der unteren Bildmitte erkennbar ist aus einer optischen Signatur in Form einer relativ breiten, unterbrochenen geraden Linie bzw. aus Linienelementen. Aus Figur 1 ist erkennbar, dass es bei zur Lageschätzung an Bushaltestellen vorteilhaft ist, wenn das System zur kamerabasierten Lageschätzung in der Lage ist je nach Position des Passagierbusses gezielt eines von mehreren, unterschiedlichen in einem Speicher abgelegten Templates auszuwählen. In Figur 2a) und b) sind die beiden den typischen optischen Signaturen im Bereich von Bushaltestellen (siehe Figur 1) entsprechenden Templates abgebildet.

Da im Bereich von Haltestellen je nach Position des Passagierbusses unterschiedliche optische Signaturen zu beachten sind (1a) oder 1b)), ist es besonders vorteilhaft, wenn bei der Vorrichtung zur kamerabasierte Lageschätzung das Mittel zur gezielten Auswahl einer von mehreren Templates mit einem Navigationssystem in Verbindung steht, welches über GPS- oder Karteninformationssystem verfügt. Auf diese Weise kann schon im Vorfeld des Template Matching abgeschätzt werden, welche der optischen Signaturen in den von der Kamera erfassten Bilddaten der Fahrzeugumgebung zu finden sein wird. Stehen solche modernen Navigations- oder Karteninformationen jedoch nicht zur Verfügung, so ist es gleichwohl auch möglich sequentiell mit den unterschiedlichen zur Verfügung stehenden Templates Versuche zum Template Matching durchzuführen werden, so lange bis eines der Templates auf eine entsprechende optische Signatur angepasst werden kann. Auch kann zur Verkürzung eines solchen sequentiellen Auswahlvorgangs gewinnbringend auf Vorwissen zurückgegriffen werden; so ist es klar, dass wenn die Haltestelleneinfahrt (entsprechen Figur 1b) ) passiert wurde in den bald nachfolgenden Bilddaten das "BUS"-Signatur (entsprechen Figur 1a) ) auftreten sollte.

An Stelle der Verwendung künstlich erzeugter Templates (beispielsweise CAD-Modelle), ist es besonders vorteilhaft die Templates direkt aus reellen Bilddaten durch das System zur kamerabasierten Positionserkennung zu erzeugen. Hierzu ist es notwendig, in Kenntnis der bei der Bildaufnahme bestehenden Beziehung des Kamerakoordinatensystems zum Weltkoordinatensystem (Koordinatensystem der Fahrzeugumgebung) die einzelnen Bildpunkte innerhalb der Bilddaten auf einzelne Punkte innerhalb der Punkteliste des Templates zurückzurechnen. Es bietet sich hierbei eine manuelle Bearbeitung der Bilddaten an, bei welcher die die optische Signatur repräsentierenden Bilddaten manuell selektiert werden. Andererseits ist es gleichwohl auch denkbar, insbesondere wenn genügend Rechenleistung zur Verfügung steht, 'online', also während dem eigentlichen Betrieb des Systems, automatisch geeignete optische Signaturen aus den Bilddaten zu selektieren und in ein Template umzusetzen (beispielsweise das Abbild eines vorausfahrenden, zu verfolgenden Fahrzeuges).

Die für die Erzeugung des Templates aus den reellen Bilddaten erfolgt in der für den Fachmann bekannten Vorgehensweise durch Rücktransformation (R. C. Gonzales, R. E. Woods, *Digital Image Processing,* Addision Wesley Publ. Company, 1992).

Zur Erläuterung der Rücktransformation seien nachfolgend beispielhaft die notwendigen Gleichungen vereinfachend für die Annahme angegeben, dass sich die optische Signatur in er x-z-Ebene befind und sich nicht in die y-Ebene erstrecke (y=0):

$$Z_w = \frac{-h\left\{(X_i - x_{ic})\dfrac{f}{S_x}.\sin\varphi + (Y_i - y_{ic})\dfrac{f}{S_y}\cos\varphi\sin\alpha - f\cos\varphi\cos\alpha\right\}}{(Y_i - y_{ic})\dfrac{f}{S_y}\cos\alpha + f\sin\alpha}$$

$$X_w = \frac{h\left\{(X_i - x_{ic})\dfrac{f}{S_x}\cos\varphi - (Y_i - y_{ic})\dfrac{f}{S_y}\sin\varphi\sin\alpha + f\sin\varphi\cos\alpha\right\}}{(Y_i - y_{ic})\dfrac{f}{S_y}\cos\alpha + f\sin\alpha}$$

$Y_w$ = 0.0;

wobei sich w auf das Weltkoordinatensystem, i auf das Kamerakoordinatensystem und ic auf den Mittelpunkt des Kamerakoordinatensystems bezieht. f entspricht der Brennweite der Kamera, $S_x$ der horizontalen Pixelgröße und $S_y$ der vertikalen Pixelgröße des Kamerachips. *h* entspricht der Höhe der Kamera, φ dem Gierwinkel und α dem Nickwinkel der Kamera.

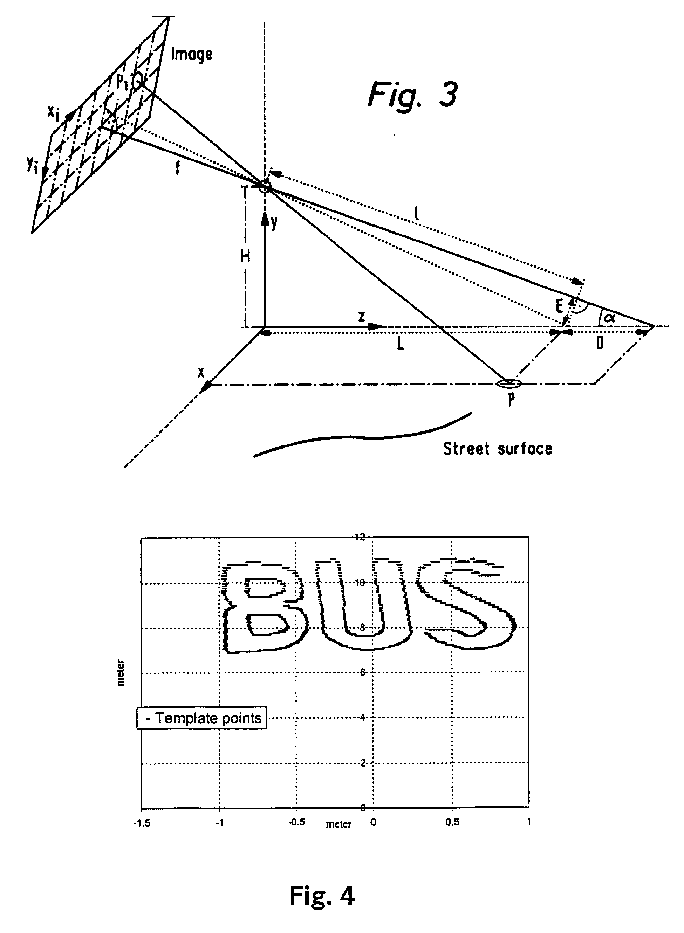

In Figur 3 beschreibt die der Berechnung zugrunde liegenden geometrischen Verhältnisse. In der Praxis kann bei Passagierbussen auf Grund deren großen Radstandes von einem konstanten Nickwinkel α und einer konstanten Höhe *h* ausgegangen werden. Der Rollwinkel und der Gierwinkel φ können zu Null angenommen werden. In Figur 4 ist beispielhaft ein aus einer solchen Rücktransformation von Bilddaten (entsprechend Figur 1a)) gewonnenes dreidimensionales Template abgebildet.

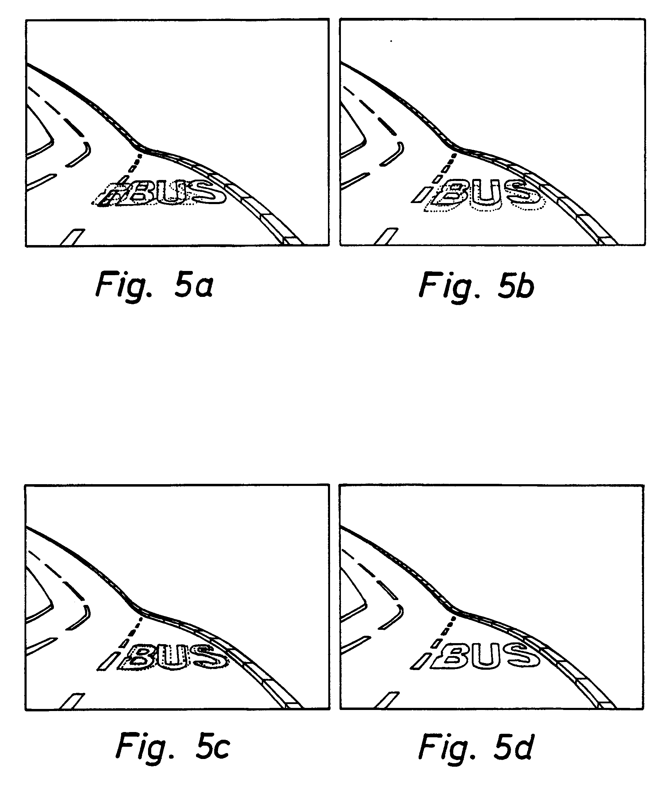

Im Rahmen des Template Matching werden die Kamerakoordinaten aus der Beziehung zwischen den Abbildungsparametern des auf die Bilddaten der optischen Signatur angepassten Templates und den Koordinaten der Fahrzeugumgebung berechnet. Hierzu wird rechnerisch die Ausrichtung der Kamera schrittweise verändert und zu jeder Veränderung die Güte der Übereinstimmung der Abbildung des Templates mit den Bilddaten der optischen Signatur verglichen. In Figur 5 a)-d) wird beispielhaft ein solcher Variationsvorgang aufgezeigt. Indem das aus Figur 4 bekannte Template mehrfach unter der Annahme unterschiedlicher Kamerakoordinaten mit den Bilddaten aus Figur 1 a) überlagert wurde, wurde mit den für Figur 5d) angenommenen Kamerakoordinaten eine optimale Überlagerung erzielt (, best fit'). In Bezug auf die für Figur 5d) angenommen Kamerakoordinaten entspricht Figur 5a) einer Verschiebung der Kamera um 0,5m in x-Richtung, Figur 5b) einer Verschiebung um 0,5m in Y-Richtung und Figur 5c) um eine Änderung des Nickwinkels b um 1°. Es zeigt sich, dass bereits bei geringer Variation der angenommenen Kamerakoordinaten ein signifikanter Mismatch (Unstimmigkeit zwischen Bilddaten und darauf projiziertem Template) auftritt. Andererseits ist dies ein Zeichen, dass bei guter Übereinstimmung (Match) die Kamerakoordinaten auch sehr gut geschätzt werden können.

Nach der Transformation vom Weltkoordinatensystem (Koordinatensystem der Umgebung beziehungsweise der optischen Signatur) in das Kamerakoordinatensystem durch Transformation und Rotation wurde die Projektion für die in Figur 5 aufgezeigte Überlagerungen hierbei vereinfacht, gemäß

$$X_{im} = \frac{f}{S_x} \cdot \frac{X_c}{Z_c} + mx_0$$

$$Y_{im} = -\frac{f}{S_y} \cdot \frac{Y_c}{Z_c} + my_0$$

Zur Bestimmung des der besten Übereinstimmung von Template und Bilddaten ist es denkbar, in gewinnbringender Weise die Güte der Übereinstimmung, im Rahmen einer Standardkorrelation gemäß

$$c(s,t) = \sum_x \sum_y f(x,y)w(x+s,y+t)$$

zu errechnen. Dabei erfolgt die Summation über denjenigen Bereich, für welchen die Abbildung des Templates w(x,y) und die Bilddaten der optischen Signatur f(x,y) überlappen. Es tritt hierbei dann der maximale Wert von c(s,t) auf, wenn die Übereinstimmung der Abbildung des Templates mit den Bilddaten der optischen Signatur die höchsten Güte aufweist. Eine solche Berechnungsmethode hat sich insbesondere bei der Verarbeitung von Graustufen Bildern bewährt. Werden jedoch Kantenbilder verarbeitet, ist diese Berechnungsmethode des 'best fit' nicht besonders robust. Ein ‚best fit' lässt sich hierbei meist nur finden, wenn das Template mit dem die optische Signatur repräsentierenden Ausschnitt des Kantenbildes in Größe und Orientierung genau übereinstimmt.

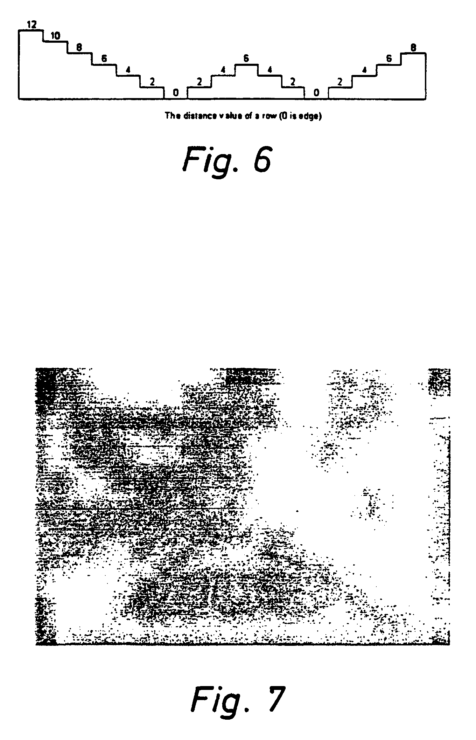

Aus diesem Grunde bietet es sich bei der Bearbeitung von Kantenbildern an, die Kantenbilder vor dem Template Matching beziehungsweise der Suche nach dem ‚best fit' erst einer Distanztransformation (R. Lotufo, R. Zampirolli, *Fast mulidimensional parallel euclidean distance transform based on mathematical morphology,* in T. Wu and D. Borges, editors, *Proccedings of SIBGRAPI 2001, XIV Brazilian Symposium on Computer Graphics and Image Processing,* pages 100-105. IEEE Computer Society, 2001.) zu unterziehen. Das aus der Distanztransformation resultierende Bild ist ein Bild, bei welchem jeder Wert eines Bildpunktes die Distanz dieses Bildpunktes zu der diesem nächstliegenden Kante beschreibt. Die Bildpunkte einer Kanten werden hierbei mit dem Wert 0 beaufschlagt, während der am weitesten entfernte Punkt beispielsweise mit einem vorbestimmten Maximalwert belegt wird. In Figur 6 wird ein Beispiel für die Werteverteilung innerhalb eines zweidimensionalen Distanzbildes (Linie) aufgezeigt. Bei der Generierung eines Distanzbildes sind im Wesentlichen 3 Bearbeitungsschritte zu befolgen. Zuerst wird aus den von einer Kamera gelieferten Bilddaten ein Kantenbild erzeugt, sodann wird für jeden der Bildpunkte die Entfernung zur nächstliegenden Kante bestimmt (Bildpunkte der Kanten erhalten den Wert 0 zugewiesen). Abschließend erhalten alle Bildpunkte anstelle der ursprünglichen Bildinformation die zuvor bestimmten Werte zugeordnet. In Figur 7 ist beispielhaft ein aus den in Figur 1a) abgebildeten Bilddaten berechnetes Distanzbild als Grauwertbild dargestellt. Je heller die Bildpunkte in diesem Distanzbild, desto weiter ist dieser Bildpunkt von einer Kante entfernt.

Erfolgt nun in vorteilhafter Weise das Template Matching auf einem Distanzbild, so wird bevorzugt die Standardkorrelation des distanztransformierten Bildes mit der Abbildung des Templates gemäß

$$DS = \sum_{i=1}^{n} D_{im}(T[template]) = f(\alpha,\beta,\varphi,X,Y,Z)$$

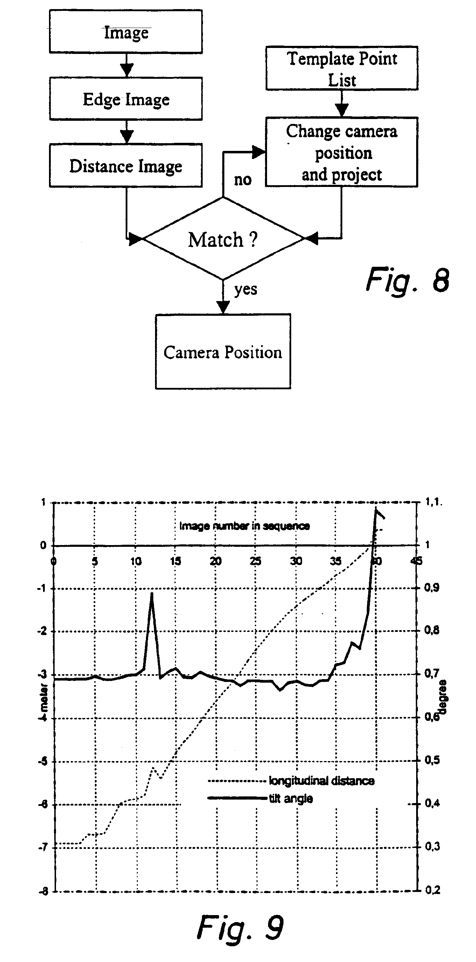

berechnet. Hierbei beschreiben $\alpha,\beta,\varphi,X,Y,Z$ den Nick-, Rollund Gierwinkel des Fahrzeuges, sowie die Kamerapose in longitudinale, lateraler Ausrichtung und in ihrer Höhe. T beschreibt die Transformation des Koordinatensystems der Umgebung in die Kamerakoordinaten und $D_{im}$ den Wert der Distanztransformation derjenigen Bilddaten, welche mit dem entsprechenden Punktes des Templates korrespondieren. Das Maß DS hierbei für den Fall minimal, dass die Übereinstimmung der Abbildung des Templates mit den Bilddaten der optischen Signatur die höchste Güte (‚best fit') aufweist. In Figur 8 ist in Form eines Flussdiagramms das vorab beschriebene gewinnbringende Verfahren zum Template Matching nochmals erläutert.

Besonders effektiv lassen sich die Kamerakoordinaten und somit die Position des Straßenfahrzeuges mittels zweier, aufeinander folgender Verfahrensschritte ermitteln. In einem ersten Schritt werden die Abbildungsparameter des Templates in großen Schritten variiert, so dass relativ rasch ein erster grober Schätzwert ermittelt werden kann. Dieser Verfahrensschritt kann weiter beschleunigt werden, wenn die Höhe der Kamera und der Kippwinkel nicht beachtet beziehungsweise nicht variiert werden. Insbesondere wenn die Erfindung in dynamisch träge Fahrzeuge wie Passagierbusse eingesetzt wird, kann auch der Nickwinkel bei der Variation außen vor bleiben.

In einer an den groben Suchschritt anschließenden feinmaschigeren Suchschritt wird der Wertebereich um den zuvor grob ermittelten Schätzwert eingeschränkt. Hierbei kann in gewinnbringender Weise in iterativen Schritten die Schrittweite der Parametervariation schrittweise verringert werden. Es hat sich in der Praxis gezeigt, dass sich mittels dieses zweistufigen Verfahrens bereits mit 2-3 Iterationsschritten ein gutes Ergebnis erzielen lässt.

Ein solches Ergebnis lässt sich weiterhin verbessern, wenn darauf in vorteilhafter Weise der Powell Minimierungs-Algorithmus (S. A. Teukolsky, B. P. Flannery, W. H. Press, W. T. Vetterling, Numerical Recipes in C++. The art of Scientific Computing, Chapter 10, Second Edition) angewandt wird. Dieser Algorithmus sucht das Minimum einer Funktion zu ermitteln, benötigt hierfür jedoch keine Ableitung dieser Funktion, sondern begnügt sich mit guten Startkoordinaten. Die grundlegende Idee hinter der Powell Minimierung besteht darin, dass eine Minimumssuche im dreidimensionalen Raum in mehrere Minimumsuchen im zweidimensionalen Raum aufgespalten wird. Dieser Algorithmus geht von einem Satz von Vektoren aus; üblicherweise von Einheitsvektoren. Die Minimierungsmethode läuft ausgehend vom Startpunkt entlang eines dieser Vektoren bis er auf ein Minimum stößt. Von dort aus läuft er in Richtung eines nächsten Vektors bis wiederum ein Minimum auftritt. Dieser Vorgang wird solange fortgesetzt, bis bestimmte vorgegebene Bedingungen, wie beispielsweise Anzahl an Iterationen oder minimal zu erzielende Änderungen, erfüllt sind. Die Bedeutung der Powell Minimierung ist in ihrem Automatismus bei der Minimumssuche zu sehen. Bei der Anwendung der Powell Minimierung im Rahmen der erfinderischen kamerabasierten Positionsbestimmung dienen als Ausgangspunkt die optimierten Kamerakoordinaten wie sie bei der grob gerasterten Suche (wie oben beschrieben) gefunden wurden. Da sich von Bildaufnahme zu Bildaufnahme die Kamerakoordinaten im allgemeinen nur unerheblich ändern, wird bei der Bearbeitung einer Bildsequenz, als Ausgangspunkt einer neuen Powell Minimierung immer die bei der letzten Powell Minimierung als optimal gefundenen Kamerakoordinaten verwandt. Diese Vorgehensweise erspart rechenaufwändige grob und fein gerasterte Suchen für jedes einzelne Bild. Zum besseren Verständnis der Effekte der Powell Minimierung sei auf Figur 9 verwiesen. In Figur 9 ist das Ergebnis einer Powell Minimierung in Bezug auf eine Bildfolge aufgezeigt, wie sie für das Ausführungsbeispielspiel der Erfindung zur kamerabasierten Positionsschätzung bei Passagierbusse im Bereich von Bushaltestellen typischer Weise auftritt. Über eine Bildfolge von 41 Bildern sind die geschätzte Längsentfernung des Passagierbusses zur optischen Signatur (gestrichelte Linie) und der Nickwinkel des Passagierbusses (durchgezogene Linie) aufgetragen. Das Diagramm zeigt für das zwölfte Bild innerhalb der Bildsequenz einen unerwarteten Wert für die Längsentfernung. Aber beim Blick auf die den Nickwinkel repräsentierende Kurve ist auch dort ein Sprung zu sehen, so dass klar wird, dass bei der Verarbeitung dieser Bilddaten wohl ein Schätzfehler aufgetreten sein muss. Es zeigt sich somit, dass es äußert vorteilhaft ist, die geschätzten Kamerakoordinaten über die Zeit zu verfolgen und miteinander in Relation zu setzen, da ein Fehler in der Einschätzung der Längsentfernung und dem Nickwinkel aus einem einzelnen monookularen Bild nur schwerlich zu erkennen ist.

In besonders vorteilhafter Weise kann bei der kontinuierlichen Beobachtung von Bildfolgen das Ergebnis der Powell Minimierung weiter verbessert werden, wenn die Ergebnisse der einzelnen Powell Minimierungen einem Kalman Filter (G. Welch, G. Bishop, *An Introduction to the Kalman Filter,* University of North Carolina at Chapel Hill, Department of Computer Science, TR 95-041.) zugeführt werden. Bei einem für die erfinderische kamerabasierte Positionsschätzung besonders geeigneten Design des Kalmanfilters werden fünf Freiheitsgrade des Gesamtsystems betrachtet. Dies sind die Längsentfernung (Z), die Geschwindigkeit (V), der Gierwinkel ($\varphi$), der Nickwinkel ($\alpha$) und der seitliche Versatz (X). Unter Beachtung dieser Freiheitsgrade folgt für das Filtermodell:

$$V = \dot{Z} = V_{veh}$$

$$\dot{V} = 0$$

$$\dot{\varphi} = \dot{\varphi}_{vehicle}$$

$$\dot{\alpha} = 0$$

$$\dot{X} = V\,\varphi$$

Nachfolgend sind die für die Berechnung notwendigen Gleichungen angegeben. Auf Grund der vorliegenden perspektivischen Projektion sind die Gleichungen nicht-linear. Dementsprechend muss bei der erfindungsgemäßen Ausgestaltung die erweiterte Form des Kalmanfilters und die Jokobi Matrix Form des Gleichungssystems angewandt werden.

$$xi = \frac{f \cdot \dfrac{Xc}{Zc}}{Sx} + mx0$$

$$yi = \frac{-f \cdot \dfrac{Yc}{Zc}}{Sy} + my0$$

Wobei Xc, Yc und Zc die in das Kamerakoordinatensystem transformierten Koordinaten Xw, Yw und Zw der optischen Signatur (Weltkoordinatensystem) sind; entsprechend:

$Xc = Xw\cos\varphi\cos\beta + (Yw - h)\cos\varphi.\sin\beta - Zw\sin\varphi$

$Yc = Xw(\sin\alpha\sin\varphi\cos\beta - \cos\alpha\sin\beta) + (Yw\text{-}h)(\sin\alpha\sin\varphi\sin\beta + \cos\alpha\cos\beta) + Zw\sin\alpha\cos\varphi$

$Zc = Xw(\cos\alpha\sin\varphi\cos\beta + \sin\alpha\sin\beta) + (Yw\text{-}h)(\cos\alpha\sin\varphi\sin\beta - \sin\alpha\cos\beta) + Zw\cos\alpha\cos\varphi$

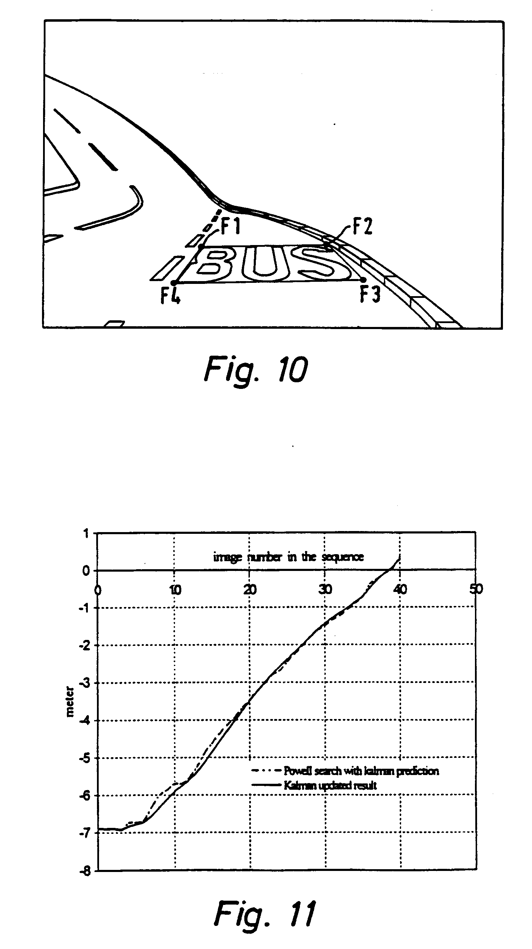

In Figur 11 ist zum Vergleich die mittels der Powell Minimierung ermittelte Längsentfernung (gestichelte Linie) und deren mittels obiger Kalman Filterung verbesserte Schätzung (durchgezogene Linie) angegeben. Die Kalmanfilterung resultiert in einem sehr weichen Übergang in der Längsentfernung, was auch am ehesten dem reellen Empfinden von Businsassen entspricht. Es ist auch bemerkenswert, dass der Fehler in Bild 12, welcher in der Kurve in Figur 9 noch deutlich hervortrat, nicht mehr auftritt. Anderseits ist tritt er hier, trotz des identischen Bildmaterials, auch nicht mehr bei der Neuberechung mittels der Powell Minimierung auf (gestichelte Linie); dieser Effekt kann darauf zurückzuführen sein, dass bei diesem Durchgang der Startpunkt bei der Schätzung mittels der Powell Minimierung ein anderer war. Alternativ zur Verwendung des Powell Minimierungs-Algorithmus, ist es sehr wohl auch denkbar, in den Fällen in welchen gutes Schätzwerte vorliegen, die Parameter der korrespondierenden Bildpunkte zwischen Modell- und Kantenbild direkt dem Kalmanfilter zuzuführen. Hierzu eignet sich insbesondere ein Kalmanfilter in der Ausgestaltung und Parametrisierung wie zuvor in Verbindung mit der Powell Minimierung beschrieben.

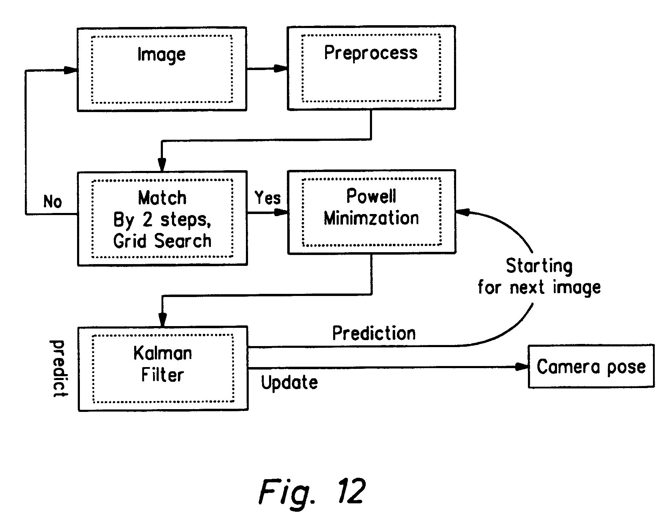

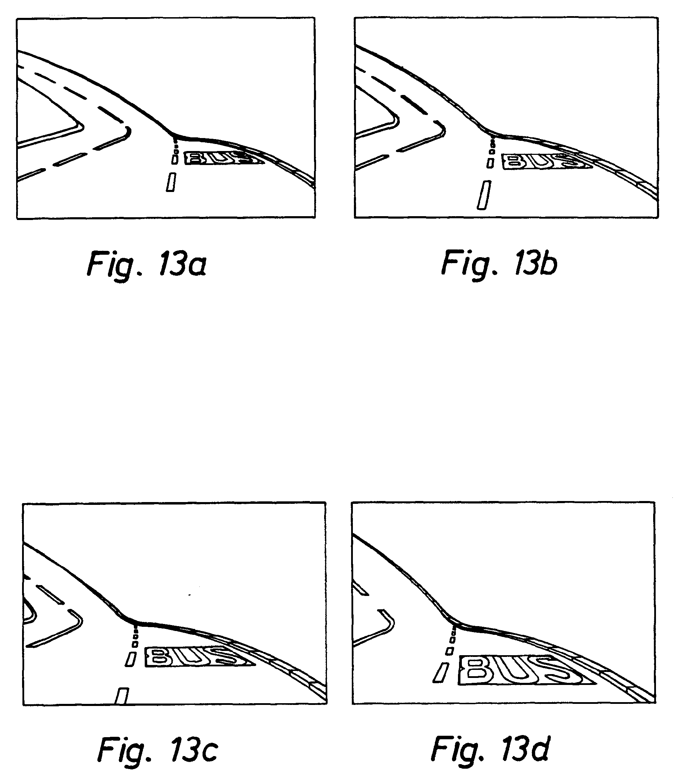

Abschließend sei die vorangegangene detaillierte Diskussion zusammenfassend in Figur 12 das das gesamte Template Matching und Tracking als Ablaufdiagramm dargestellt. Figur 13 zeigt Beispiele für die Anwendung dieses Verfahrens. Hierbei wurde das in Figur 2a) dargestellte Template sequentiell einer Abfolge von bei der Einfahrt in eine Bushaltestelle erfassten Bilddaten überlagert. Obwohl sich in der Abfolge dieser vier beispielhaft dargestellten Bilddaten die Längsentfernung zwischen Kamera und optischer Signatur jeweils um mehr als 2 Meter änderte, zeigt das Ergebnis des Template Matchings einwandfreie Überlagerungen während des gesamten Vorgangs der Anfahrt an die Bushaltestelle; im Umkehrschluss hätte somit aus den Abbildungsparametern mit sehr guter Genauigkeit die Position des Passagierbusses geschätzt werden können.

Selbstverständlich ist die Erfindung nicht auf die Verwendung zur gezielten Heranführung von Bussen an Bushaltestellen, sondern kann insbesondere auch vorteilhaft auch zur Unterstützung beim Einparken in Parkbuchten, Garagen oder anderen Stellplätzen genutzt werden. In einer solch vorteilhaften Verwendung der Erfindung können geeignete Parkräume mit entsprechenden optischen Signaturen versehen werden. Hierbei müssen die optischen Signaturen nicht notwendiger Weise auf den Fahrbahn beziehungsweise dem Boden der Parkbucht aufgebracht werden, sondern es ist sehr wohl auch denkbar gegebenenfalls die Wand hinter der Parkbucht (Wand in einem Parkhaus) mit geeigneten optischen Signaturen zu versehen. Da die Erfindung in vorteilhafter Weise auch dien Möglichkeit eröffnet dreidimensionale optische Signaturen zu verwenden, deren Bilddaten mit dreidimensionalen Bilddaten zu vergleichen (Matching), ist es auch denkbar, keine gesonderten optischen Signaturen anzubringen, sondern hierfür bereits vorhandene, geeignete bauliche Gegebenheiten heranzuziehen.

**Patentansprüche**

1. Verfahren für eine kamerabasierte Positionserkennung für ein Straßenfahrzeug,
   bei welchem das in Fahrtrichtung eines Fahrzeug liegende Umfeld mit einer Kamera erfasst wird,

worauf die Lage des Fahrzeuges in Bezug auf eine in den gewonnenen Bilddaten identifizierte optische Signatur in seiner Umgebung bestimmt wird,
wobei hierzu die Kenntnis der Beziehung zwischen dem Umgebungskoordinatensystem und dem Kamerakoordinatensystems herangezogen wird,
**dadurch gekennzeichnet,**
**dass** die Lagebestimmung in bezug auf die optische Signatur auf Basis eines Template-Matching auf den Bilddaten erfolgt.

2. Verfahren nach Anspruch 1,
**dadurch gekennzeichnet,**
**dass** die in Kenntnis der Lage des Fahrzeuges in Bezug auf die optische Signatur, eine zumindest teil-autonome Fahrzeugführung eingeleitet wird,
im Rahmen dessen das Fahrzeug an einer vorbestimmten Position in Bezug auf die optische Signatur zum Halt gebracht wird.

3. Verfahren nach Anspruch 1,
**dadurch gekennzeichnet,**
**dass** das Template-Matching in einem dreidimensionalen Koordinatenraum erfolgt.

4. Verfahren nach einem der vorhergehenden Ansprüche,
**dadurch gekennzeichnet,**
**dass** das Template-Matching auf Basis eines Kantenbildes erfolgt.

5. Verfahren nach einem der vorhergehenden Ansprüche,
**dadurch gekennzeichnet,**
**dass** die Templates als Punktlisten abgelegt sind, so dass das Template-Matching auf Punkt zu Punkt-Basis erfolgt.

6. Verfahren nach einem der vorhergehenden Ansprüche,
**dadurch gekennzeichnet,**
**dass** das vor der Anpassung (Matching) das jeweilige Template aus einer Menge unterschiedlicher Templates ausgewählt wird.

7. Verfahren nach Anspruch 6,
**dadurch gekennzeichnet,**
**dass** die Auswahl auf Basis von GPS- oder Karten-Information erfolgt.

8. Verfahren nach einem der vorhergehenden Ansprüche,
**dadurch gekennzeichnet,**
**dass** im Rahmen des Template Matching,
bei welchem die Kamerakoordinaten aus der Beziehung zwischen den Abbildungsparametern des auf die Bilddaten der optischen Signatur angepassten Templates und den Koordinaten der Fahrzeugumgebung berechnet wird, rechnerisch die Ausrichtung der Kamera schrittweise verändert wird, und zu jeder Veränderung die Güte der Übereinstimmung der Abbildung des Templates mit den Bilddaten der optischen Signatur verglichen wird.

9. Verfahren nach Anspruch 8,
**dadurch gekennzeichnet,**
**dass** zur Berechnung der Güte der Übereinstimmung eine Standardkorrelation gemäß

$$c(s,t) = \sum_x \sum_y f(x,y) w(x+s, y+t)$$

berechnet wird,
wobei die Summation über denjenigen Bereich erfolgt, für welchen die Abbildung des Templates w(x,y) und die Bilddaten der optischen Signatur f(x,y) überlappen,
und wobei der maximale Wert von c(s,t) dann auftritt, wenn die Übereinstimmung der Abbildung des Templates mit den Bilddaten der optischen Signatur die höchsten Güte aufweist.

**10.** Verfahren nach Anspruch 8,
**dadurch gekennzeichnet,**
**dass** vor der Berechnung der Standardkorrelation die Bilddaten einer Distanztransformation unterzogen werden, und dass nachfolgen die Standardkorrelation des distanztransformierten Bildes mit der Abbildung des Templates gemäß

$$DS = \sum_{i=1}^{n} D_{im}\left(T\big[template\,\big]\right) = f(\alpha, \beta, \varphi, X, Y, Z)$$

berechnet wird,
wobei $\alpha, \beta, \varphi, X, Y, Z$ den Nick-, Neige- und Rollwinkel des Fahrzeuges, sowie die Kamerapose in longitudinale, lateraler Ausrichtung und in ihrer Höhe beschreiben, T der Transformation des Koordinatensystems der Umgebung in des Kamerakoordinaten und $D_m$ dem Wert der Distanztransformation derjenigen Bilddaten, welche mit dem entsprechenden Punktes des Templates korrespondieren, entspricht,
und wobei DS dann minimal wird, wenn die Übereinstimmung der Abbildung des Templates mit den Bilddaten der optischen Signatur die höchste Güte aufweist.

**11.** Verfahren nach Anspruch 10,
**dadurch gekennzeichnet,**
**dass** zum Ermittlung des tatsächlichen Minimums von DS, auf die Powell Minimierung zurückgegriffen wird.

**12.** Verfahren nach einem der Ansprüche 10 oder 11,
**dadurch gekennzeichnet,**
**dass** die Schätzung des tatsächlichen Minimums durch die nachfolgende Verwendung eines Kalmanfilters verbessert wird.

**13.** Vorrichtung zur kamerabasierten Positionserkennung für ein Straßenfahrzeug,
bestehend aus einer Kamera zur Erfassung der in Fahrtrichtung des Fahrzeuges liegenden Umfeldes,
und einer Bildverarbeitungseinrichtung mit Objekterkennung zur Bestimmung der Lage des Fahrzeuges in Bezug auf eine optische Signatur in seiner Umgebung,
**dadurch gekennzeichnet,**
**dass** der Bildverarbeitungseinrichtung zur Lageermittlung mit einer Speichereinheit in Verbindung steht, in welcher ein der optischen Signatur entsprechendes Template abgelegt ist,
wobei die Bildverarbeitungseinheit über ein Mittel zum Template Matching umfasst, mittels welchem dieses in der Speichereinheit abgelegte Template den Bilddaten überlagert werden kann.

**14.** Vorrichtung nach Anspruch 13,
**dadurch gekennzeichnet,**
**dass** es sich bei dem in der Speichereinheit abgelegten Template um ein dreidimensionales Template handelt.

**15.** Vorrichtung nach einem der vorhergehenden Ansprüche,
**dadurch gekennzeichnet,**
**dass** das Template im Wesentlichen dem Kantenbild der optischen Signatur entspricht.

**16.** Vorrichtung nach einem der vorhergehenden Ansprüche,
**dadurch gekennzeichnet,**
ass das Template als Punktlisten organisiert ist, so dass das Template-Matching auf Punkt zu Punkt-Basis erfolgt.

**17.** Vorrichtung nach einem der vorhergehenden Ansprüche,
**dadurch gekennzeichnet,**
**dass** in der Speichereinheit die Templates mehrerer unterschiedlicher optischer Signaturen gespeichert sind, welche gezielt für das Template Matching ausgewählt werden können.

**18.** Vorrichtung nach Anspruch 17,
**dadurch gekennzeichnet,**
**dass** die Vorrichtung mit einer Einheit zur Positionsbestimmung, insbesondere einem GPS-System oder einer Kartennavigationssystem in Verbindung steht, durch welche die Auswahl der Templates für das Template Matching gesteuert wird.

19. Vorrichtung nach einem der vorhergehenden Ansprüche,
**dadurch gekennzeichnet,**
**dass** die Bildverarbeitungseinheit ein Mittel umfasst, mittels welchem die von der Kamera gewonnenen Bilddaten einer Distanztransformation unterzogen werden können, und mittels welchem die Standardkorrelation des distanztransformierten Bildes mit der Abbildung des Templates der optischen Signatur gemäß

$$DS = \sum_{i=1}^{n} D_{im} \left( T\left[ template \right] \right) = f(\alpha, \beta, \varphi, X, Y, Z)$$

berechnet wird.

20. Vorrichtung nach Anspruch 19,
**dadurch gekennzeichnet,**
**dass** die Bildverarbeitungseinheit zur Ermittlung des tatsächlichen Minimums von DS, eine Einheit zur Powell Minimierung umfasst.

21. Vorrichtung nach einem der Ansprüche 19 oder 20,
**dadurch gekennzeichnet,**
**dass** die Bildverarbeitungseinheit einen Kalmanfilter umfasst, um die Schätzung des tatsächlichen Minimums zusätzlich zu verbessern.

22. Verwendung des Verfahrens oder der Vorrichtung nach einem der vorhergehenden Ansprüche, zur Lageerkennung und/oder Zielführung von Straßenfahrzeugen im Bereich von Bushaltestellen.

23. Verwendung des Verfahrens oder der Vorrichtung nach einem der vorhergehenden Ansprüche, zur Lageerkennung und/oder Zielführung von Straßenfahrzeugen im Bereich von Parkbuchten auf Parkplätzen oder Parkhäusern.

EP 1 480 187 A2

Fig. 1a

Fig. 1b

Fig. 2a

Fig. 2b

12

Fig. 3

Fig. 4

Fig. 5a

Fig. 5b

Fig. 5c

Fig. 5d

The distance value of a row (0 is edge)

*Fig. 6*

*Fig. 7*

Fig. 8

Fig. 9

*Fig. 10*

*Fig. 11*

Fig. 12

Fig. 13a

Fig. 13b

Fig. 13c

Fig. 13d